(19)

Europäisches Patentamt

European Patent Office

Office européen des brevets

(11) **EP 2 539 784 B1**

(12) **EUROPÄISCHE PATENTSCHRIFT**

(45) Veröffentlichungstag und Bekanntmachung des
Hinweises auf die Patenterteilung:
**02.07.2014 Patentblatt 2014/27**

(21) Anmeldenummer: **11711481.9**

(22) Anmeldetag: **30.03.2011**

(51) Int Cl.:
***G05B 19/416*** *(2006.01)*

(86) Internationale Anmeldenummer:
**PCT/EP2011/001599**

(87) Internationale Veröffentlichungsnummer:
**WO 2011/120685 (06.10.2011 Gazette 2011/40)**

(54) **VERFAHREN ZUR ROTATORISCHEN UND/ODER LINEAREN BEWEGUNG EINES WERKSTÜCKS**

METHOD FOR ROTATABLY AND/OR LINEARLY MOVING A WORKPIECE

PROCÉDÉ POUR IMPRIMER UN MOUVEMENT ROTATIF ET/OU LINÉAIRE À UNE PIÈCE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **31.03.2010 DE 102010013526**

(43) Veröffentlichungstag der Anmeldung:
**02.01.2013 Patentblatt 2013/01**

(73) Patentinhaber: **Weiss GmbH
74722 Buchen (Odw.) (DE)**

(72) Erfinder: **KITZIG, Peter
76337 Waldbronn (DE)**

(74) Vertreter: **Manitz, Finsterwald & Partner GbR
Martin-Greif-Strasse 1
80336 München (DE)**

(56) Entgegenhaltungen:
**EP-A1- 1 754 566      DE-T2- 69 227 434
US-A1- 2009 102 411      US-B1- 6 275 778**

EP 2 539 784 B1

**Beschreibung**

Die vorliegende Erfindung betrifft ein Verfahren zur rotatorischen und/ oder linearen Bewegung eines Werkstücks von einer ersten Ruheposition in eine zweite Ruheposition.

Zur Bewegung eines Werkstücks können die unterschiedlichsten Vorrichtungen zum Einsatz gelangen. Zur Erzeugung einer linearen/translatorischen Bewegung bieten sich z.B. ein Transportband oder ein von einem Linearmotor verfahrbarer Greifer an. Soll das Werkstück in eine Drehbewegung versetzt werden, finden oftmals Rundschalttische Verwendung. Rundschalttische sind grundsätzlich aus dem Stand der Technik in unterschiedlichen Ausführungsformen bekannt. Sie dienen beispielsweise dazu, auf einem Drehteller angeordnete Werkstücke jeweils durch eine Rotation des Tellers von einer Bearbeitungs- oder Montagestation zu einer nächsten Bearbeitungs- oder Montagestation zu transportieren. Dieser Transport erfolgt üblicher- aber nicht notwendigerweise im Rahmen eines Taktbetriebes, bei dem der Teller mit jedem Takt um ein Winkelmaß gedreht wird.

Sowohl bei einer linearen Transportbewegung als auch bei einer rotatorischen Transportbewegung kommt es häufig auf Präzision an. Mit anderen Worten soll das Werkstück aus der ersten Ruheposition zuverlässig und präzise in eine vorbestimmte zweite Ruheposition bewegt werden. In vielen Fällen ist es dabei nicht nur erforderlich, dass die zweite Ruhelage exakt eingenommen wird, sondern auch ein Bewegungsprofil des Werkstücks zwischen den beiden Ruhelagen muss vorgegebenen Randbedingungen gehorchen.

Dokument US 2009/0102411 A1 offenbart ein Verfahren und entsprechende Transportvorrichtung des Standes der Technik zur rotatorischen und/oder linearen Bewegung eines Werkstücks von einer Anfangsposition in eine Zielposition.

Seit einiger Zeit kommt als wichtige Anforderung hinzu, dass der Transport möglichst energiesparend erfolgt. Die verwendeten Transportvorrichtungen sollen möglichst unter Beibehaltung der üblichen Leistungsfähigkeit und bei gleicher Präzision weniger Energie verbrauchen als bisher. Zwar sind gewisse Einsparungspotentiale - beispielsweise durch Verringerung einer Reibung zwischen den einzelnen Bauteilen - vorhanden, allerdings sind konstruktive Änderungen häufig mit höheren Herstellungs- und/oder Wartungskosten verbunden, so dass Optimierungen in diesem Bereich schnell an wirtschaftliche Grenzen stoßen.

Es ist daher eine Aufgabe der vorliegenden Erfindung, ein Verfahren zur rotatorischen und/oder linearen Bewegung eines Werkstücks von einer ersten Ruheposition in eine zweite Ruheposition zu schaffen, das den Betrieb einer Transportvorrichtung effizienter gestaltet, ohne dass wesentliche Abstriche bei der Präzision oder der Dynamik der Transportbewegung sowie der Dimensionierung der bewegten Werkstücke (z.B. Abmessungen, Trägheitsmoment, Masse) in Kauf genommen werden müssen. Außerdem soll das Verfahren einfach und kostengünstig zu implementieren sein.

Die Lösung dieser Aufgabe erfolgt durch ein Verfahren mit den Merkmalen des Anspruchs 1.

Erfindungsgemäß umfasst das Verfahren eine Eingangsphase und eine auf die Eingangsphase folgende Hauptphase. Das Werkstück wird in den jeweiligen Phasen mit unterschiedlichen Beschleunigungsprofilen beschleunigt oder abgebremst, wobei das Beschleunigungsprofil der Eingangsphase durch zumindest ein erstes Polynom und das Beschleunigungsprofil der Hauptphase durch zumindest ein zweites Polynom definiert sind. Das erste Polynom und das zweite Polynom sind derart gewählt, dass ein Übergang von dem ersten Polynom zu dem zweiten Polynom stetig ist. Ferner ist der Grad des ersten Polynoms größer als der Grad des zweiten Polynoms der mathematischen Beschreibung des Beschleunigungsverlaufs. Die Polynome charakterisieren somit die Beschleunigung des Werkstücks. Die Ableitung der Beschleunigung wird in dem vorliegenden Zusammenhang als Ruckkennwert bezeichnet. Setzt man die Ableitungen der einzelnen Polynome zusammen, so erhält man einen Verlauf des Ruckkennwerts (Ruckkennwertprofil).

Mit anderen Worten wird das Werkstück im Zuge der Bewegung von der ersten Ruheposition in die zweite Ruheposition Beschleunigungen ausgesetzt, die durch zumindest zwei zeitlich hintereinander angeordnete Polynome beschrieben werden können. Es versteht sich, dass die Eingangsphase und/oder die Hauptphase auch zwei oder mehrere Abschnitte umfassen können, die jeweils durch Polynome beschreibbar sind. Abschnittsweise kann die Beschleunigung in den beiden Phasen auch konstant oder 0 sein.

Ausgehend von der ersten Ruheposition wird zunächst ein Beschleunigungsprofil gewählt, das einem Polynom eines bestimmten Grades gehorcht. Diese einleitende Eingangsphase beschleunigt das Werkstück hinreichend "sanft" und geht möglichst "weich" in die Hauptphase über. Zu diesem Zweck ist der Übergang zwischen dem ersten Polynom und dem zweiten Polynom, das das Beschleunigungsprofil der Hauptphase beschreibt, stetig. Außerdem ist dadurch der Übergang zwischen den Polynomen mit nur kleinen Wegen behaftet. Insbesondere sind die Polynome so gewählt, dass auch ein Übergang zwischen der Ableitung des ersten Polynoms und der Ableitung des zweiten Polynoms stetig ist.

Das die Hauptphase beschreibende zweite Polynom weist einen niedrigeren Grad auf als das erste Polynom, wodurch eine Verknüpfung der beiden Polynome erleichtert wird. Dies ermöglicht zudem die Erniedrigung der charakteristischen kinematischen Werte der Hauptphase. Mit anderen Worten ist es aufgrund der Verknüpfung der beiden unterschiedlichen Polynome möglich, die Kinematik der Bewegung insgesamt so zu gestalten, dass die zur Erzeugung der Bewegung benötigte Energie/Leistung gesenkt wird, ohne dass die Dynamik und/oder die Präzision der erzeugten Bewegung nachteilig sondern vorteilhaft beeinflusst werden. Dies bedeutet im Umkehrschluss, dass mit Hilfe des Verfahrens durch Transportvorrichtungen mit herkömmlicherweise verwendeten Antriebseinheiten Werkstücke mit größeren Trägheitsmomenten bzw. Massen bewegt werden können. Außerdem werden durch das Verfahren in der Transportvorrichtung auftretende Schwingungen reduziert oder sogar im Wesentlichen vollständig eliminiert.

Weitere Ausführungsformen der Erfindung sind den Unteransprüchen, der Beschreibung und den beigefügten Zeichnungen zu entnehmen.

Gemäß einer vorteilhaften Ausführungsform ist zusätzlich zu den bereits beschriebenen Phasen eine auf die Hauptphase folgende Ausgangsphase vorgesehen, während der das Werkstück gemäß einem Beschleunigungsprofil verzögert wird, das durch ein drittes Polynom definiert ist. Insbesondere ist das dritte Polynom ebenfalls höheren Grades als das zweite Polynom. In diesem Zusammenhang wird ergänzend darauf hingewiesen, dass in bestimmten Fällen auch lediglich die nachgeschaltete Ausgangsphase vorgesehen sein kann. Die vorgeschaltete Eingangsphase entfällt dann.

Vorzugsweise weist das dritte Polynom einen inversen oder gespiegelten Verlauf bezüglich des ersten Polynoms auf. Das Beschleunigungsprofil umfasst somit neben der der Hauptphase vorgeschalteten Eingangsphase eine der Hauptphase nachgeschaltete Ausgangsphase, wobei sich eine im Allgemeinen symmetrische Ausgestaltung des ersten und des dritten Polynoms (z.B. Spiegelung, Punktsymmetrie, ...) als besonders einfach umsetzbar und effizient erwiesen hat.

Bevorzugt sind das erste und - falls vorgesehen - das dritte Polynom achten Grades. Das zweite Polynom kann beispielsweise fünften Grades sein.

Bei einer weiteren Ausführungsform des Verfahrens bilden die Randwerte einer Ableitung des zweiten Polynoms zusammen mit dem jeweiligen globalen Maximum einer Ableitung des ersten und des dritten Polynoms (falls vorgesehen) jeweils eine Spitze. Die Beschleunigung steigt im Endbereich der Eingangsphase stark an, um direkt im Anschluss daran zu Beginn der Hauptphase wieder abzufallen. Falls eine Ausgangsphase vorgesehen ist, kann ein Übergang der beschriebenen Art auch zwischen der Hauptphase und der Ausgangsphase vorgesehen sein.

Insbesondere weist die Ableitung des zweiten Polynoms der Hauptphase zumindest abschnittsweise einen parabelartigen Verlauf auf oder ist noch niedrigeren Grades, um die Energieeffizienz des Verfahrens zu steigern. Es wird nochmals darauf hingewiesen, dass die Hauptphase durch eine Abfolge mehrerer unterschiedlicher Polynome definiert sein kann.

Um die Anpassung der Transportbewegung an ein gewünschtes Bewegungs-/Beschleunigungsprofil möglichst einfach zu gestalten, können die Koeffizienten des zweiten Polynoms jeweils durch eine Funktion zumindest eines charakteristischen Parameters definiert sein. D.h. zwar sind alle Koeffizienten von dem gleichen Parameter (z.B. ein Zeitintervall/eine Dauer) abhängig, der jeweilige funktionale Zusammenhang zwischen dem jeweiligen Koeffizienten und dem Parameter wird jedoch für jeden Koeffizienten individuell festgelegt. Unter einem funktionalen Zusammenhang sind auch konstante Funktionen zu verstehen (z.B. $f(x) = $ const. oder 0). Grundsätzlich ist denkbar, dass die vorstehend beschriebenen Koeffizientenfunktionen auch von mehr als einem Parameter abhängen (z.B. $f(x,y,z)$).

Durch eine Änderung des zumindest einen Parameters (z.B. der Dauer der vorgeschalteten Eingangsphase und/oder - falls vorgesehen - der nachgeschalteten Ausgangsphase) werden somit alle Koeffizienten angepasst, so dass ein aufwendiger Anpassungsprozess für jeden einzelnen Koeffizienten nicht mehr notwendig ist. Bevorzugt beschreibt der charakteristische Parameter beispielsweise zumindest eine Eigenschaft des Beschleunigungsprofils der Eingangsphase und ist insbesondere dessen Dauer. Die Dauer/Länge der Eingangsphase (und/oder der Ausgangsphase, falls vorhanden) beeinflusst somit die Koeffizienten des zweiten Polynoms und damit das Beschleunigungsprofil des zu transportierenden Werkstücks. Durch eine geeignete Wahl der Verknüpfungen zwischen dem charakteristischen Parameter und den einzelnen Koeffizienten kann zudem auf einfache Weise sichergestellt werden, dass diese nur in vorbestimmten Grenzen verändert werden können, um unzulässige Beschleunigungswerte und/oder Betriebszustände zu vermeiden und die Energieeffizienz zu verbessern. Letztlich dienen die genannten Verknüpfungen somit nicht nur zur Vereinfachung der Anpassung des Beschleunigungsprofils der Hauptphase, sondern sie erhöhen bei verbesserter Energieeffizienz auch die Betriebssicherheit der das Verfahren ausführenden Transportvorrichtung.

Es hat sich als vorteilhaft erwiesen, wenn die Dauer der Eingangsphase etwa 10 % bis 40 %, bevorzugt 20 % bis 30 % der Dauer der Hauptphase beträgt.

Die Erfindung betrifft ferner eine Transportvorrichtung mit einem für eine Aufnahme eines Werkstücks geeigneten Transportelement, das rotatorisch und/oder linear von einer ersten Ruheposition in eine zweite Ruheposition bewegbar ist, wobei die Transportvorrichtung eine programmierbare Steuervorrichtung umfasst, die dazu ausgebildet ist, die Bewegung des Transportelements gemäß einem Verfahren nach zumindest einer der vorstehend beschriebenen Ausführungsformen zu steuern.

Anstelle der programmierbaren Steuervorrichtung kann die Transportvorrichtung eine mechanische Zwangssteuerung umfassen, die derart ausgebildet ist, dass das Transportelement gemäß einem Verfahren nach zumindest einer der vorstehend beschriebenen Ausführungsformen bewegbar ist. Vorzugsweise ist das Transportelement ein Abtriebsglied (z.B. ein Drehteller), das in einen Wulst einer Kurve eingreifende Mitnehmer aufweist, um durch eine Drehbewegung der Kurve eine zwangsgesteuerte Drehbewegung des Abtriebsglieds zu erzeugen.

Nachfolgend wird die Erfindung rein beispielhaft anhand vorteilhafter Ausführungsformen unter Bezugnahme auf die Zeichnungen beschrieben. Es zeigen:

Fig. 1          ein Beschleunigungsprofil einer Transportbewegung gemäß einer Ausführungsform des erfindungsgemäßen Verfahrens;

Fig. 2          das sich aus dem Beschleunigungsprofil der Fig. 1 ergebende Geschwindigkeitsprofil;

Fig. 3          das sich aus dem Beschleunigungsprofil der Fig. 1 ergebende Bewegungsprofil;

Fig. 4          das zur Erzeugung des Beschleunigungsprofils der Fig. 1 aufzubringende Antriebsmoment;

Fig. 5          den Verlauf der als Ruckkennwert bezeichneten ersten Ableitung des Beschleunigungsprofils der Fig. 1;

Fig. 6          ein Beschleunigungsprofil einer Transportbewegung gemäß einer weiteren Ausführungsform des erfindungsgemäßen Verfahrens;

Fig. 7 bis 10     Darstellungen des Geschwindigkeitsprofils, des Bewegungsprofils, des aufzubringenden Antriebsmoments und des Ruckkennwerts der Bewegung gemäß Fig. 6;

Fig. 11        ein Beschleunigungsprofil einer Transportbewegung gemäß einer dritten Ausführungsform des erfindungsgemäßen Verfahrens; und

Fig. 12 bis 15    Darstellungen des Geschwindigkeitsprofils, des Bewegungsprofils, des aufzubringenden Antriebsmoments und des Ruckkennwerts der Bewegung gemäß der Fig. 11.

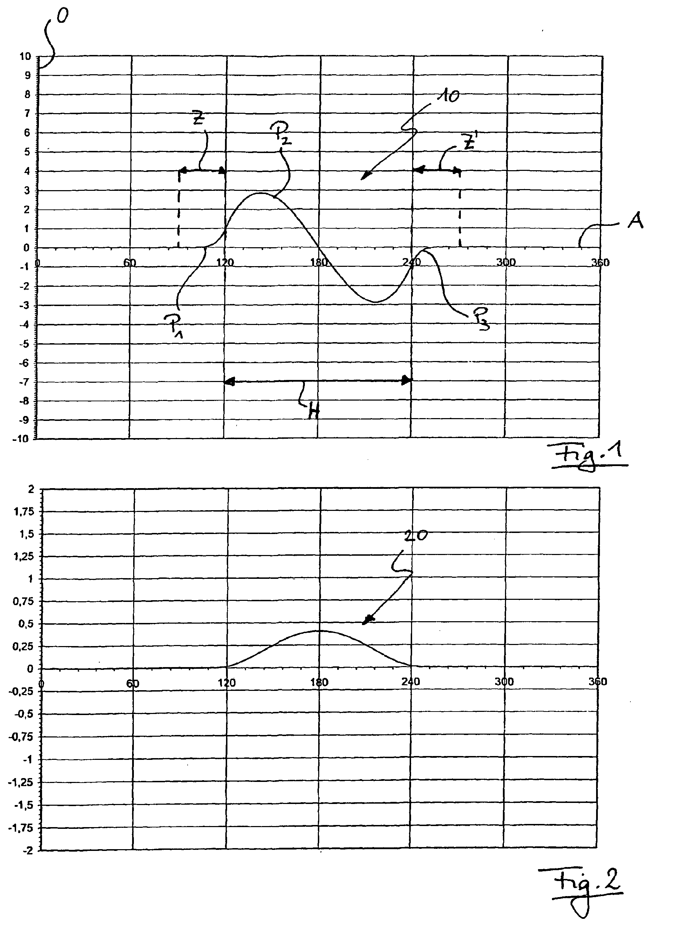

Fig. 1 zeigt ein Beschleunigungsprofil 10, das bei einem Rundschalttisch zur Bewegung eines Werkstücks von einer ersten Ruheposition in eine zweite Ruheposition eingesetzt wird. Die Ordinate O des dargestellten Diagramms ist mit relativen Einheiten versehen, so dass die angegebenen Zahlenwerte lediglich zur Orientierung dienen. Die Abszisse A stellt einen Drehwinkel einer Kurventrommel des Rundschalttischs dar. Die Kurventrommel weist eine Antriebsnut auf, in die Mitnehmer eines Drehtellers eingreifen, der das zu bewegende Werkstück aufnimmt. Um eine getaktete Drehbewegung des Drehtellers zu erzeugen, ist die Kurventrommel mit Rastgängen versehen. Die Rastgänge definieren die Ruhepositionen des Werkstücks, d.h. zwar dreht sich die Kurventrommel auch während der Rastgänge um einen bestimmten Drehwinkel, eine wesentliche Drehbewegung des Drehtellers wird hierdurch jedoch nicht erzeugt. Zwischen den Rastgängen weist die Antriebsnut einen Antriebsabschnitt auf, der die Drehbewegung des Drehtellers erzeugt, um das Werkstück von der ersten Ruhe-/Bearbeitungsposition in die zweite Ruhe-/Bearbeitungsposition zu bewegen. Die getaktete Bewegung kann alternativ auch durch eine Kurventrommel erzeugt werden, die keine Rastgänge aufweist, sondern die mit einer variablen Drehzahl betrieben wird.

In dem dargestellten Beispiel findet die eigentliche Drehbewegung des Drehtellers zwischen einem Drehwinkel von 120° und einem Drehwinkel von 240° der Kurventrommel statt. Es versteht sich, dass die durch die Drehbewegung der Kurventrommel um 120° erzeugte Bewegung des Drehtellers nicht ebenfalls 120° umfassen muss, sondern in Abhängigkeit der Ausgestaltung der Antriebsnut auch einen größeren oder kleineren Betrag umfassen kann.

Es wird darauf hingewiesen, dass das Beschleunigungsprofil nicht zwingend eine Funktion des Drehwinkels einer Kurventrommel (mit oder ohne Rastgänge) sein muss. Bei linearen Bewegungen kann der Beschleunigungsverlauf beispielsweise eine Funktion der Linearposition sein. Auch eine Zeitabhängigkeit ist sowohl bei rotatorischen als auch bei linearen Bewegungen vorstellbar.

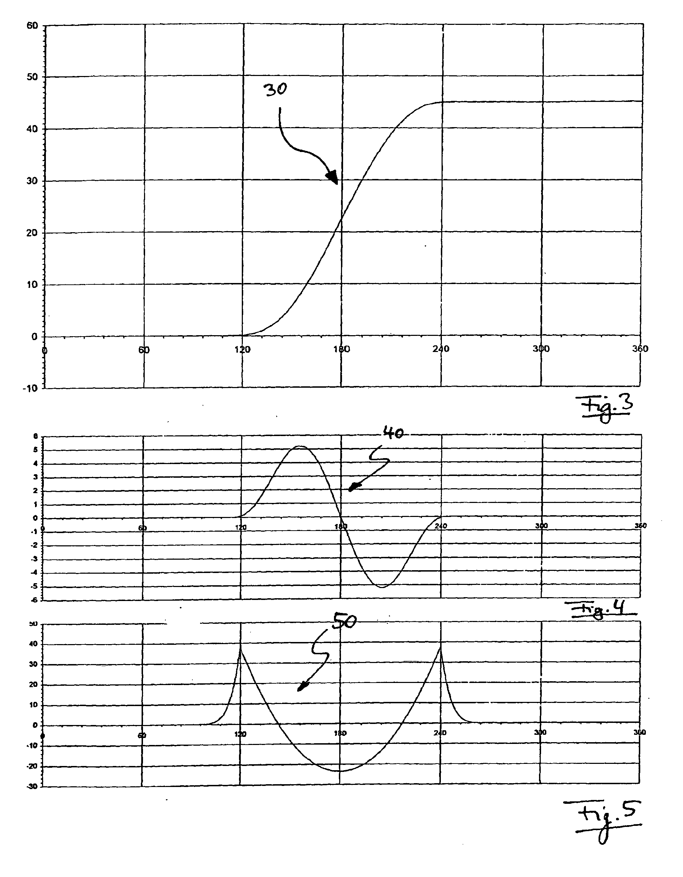

Wie vorstehend bereits erwähnt, findet bei einem Drehwinkel der Kurventrommel zwischen 0° und 120° und zwischen 240° und 360° keine wesentliche Bewegung des Drehtellers statt, was insbesondere der Fig. 3 zu entnehmen ist, die ein sich aus dem Beschleunigungsprofil 10 ergebendes Bewegungsprofil 30 zeigt. Im Vergleich zu der Amplitude der Drehbewegung von einem Ordinatenwert 0 zu einem Ordinatenwert 45, was in dem dargestellten Beispiel einer Drehung des Drehtellers um 45° entspricht, ist die durch Beschleunigungen des Drehtellers bei Drehwinkeln unter 120° erzeugte Bewegung vernachlässigbar. Dies geht auch aus Fig. 2 hervor, die ein durch das Beschleunigungsprofil 10 erzeugtes Geschwindigkeitsprofil 20 des Drehtellers zeigt. Erst kurz vor dem Abszissenwert 120 ist zu sehen, dass das Geschwindigkeitsprofil 20 nicht mehr auf der Abszisse A verläuft, sondern sich davon löst und daher eine geringfügige Geschwindigkeitszunahme des Drehtellers zu erkennen ist.

Mit anderen Worten findet zwar in einem als Eingangsphase Z bezeichneten Drehwinkelintervall zwischen 90° und 120° eine allmähliche Beschleunigung statt (unter 108° ist zwar eine Beschleunigung vorhanden, im dargestellten Maßstab ist sie allerdings nicht zu erkennen), diese hat jedoch kaum merkbare Auswirkungen auf die Bewegung des Werkstücks. Der Verlauf der Beschleunigung in der Eingangsphase Z ist trotzdem vorteilhaft, da er vorbereitend für die eigentliche Drehbewegung des Drehtellers in dem Drehwinkelintervall zwischen 120° und 240° ist, das als Hauptphase H bezeichnet wird. Insbesondere durch diese "Vorbereitung" wird die Energieeffizienz der Bewegung in der Hauptphase H ("Hauptbewegung") gesteigert.

Das Beschleunigungsprofil 10 ist in der Eingangsphase Z durch ein Polynom $P_1$ der allgemeinen Form $P_1(x) = \sum_{i=0}^{n} a_i x^i$ definiert, wobei x der Drehwinkel (Abszissenwert) ist. Der Parameter n gibt den Grad des Polynoms $P_1$ an. Das Beschleunigungsprofil 10 während der Hauptphase H wird durch ein Polynom $P_2$ beschrieben, das die allgemeine Form $P_2(x) = \sum_{i=0}^{k} b_i x^i$ mit dem Grad k aufweist, wobei der Grad n des Polynoms $P_1$ größer ist als der Grad k des Polynoms $P_2$. Die Beschleunigung wird somit vorteilhafterweise während der Eingangsphase Z erhöht, bis in die eigentlich erwünschte Drehbewegung der Hauptphase H übergegangen wird. Dieser Übergang ist so ausgestaltet, dass er - auch in der Ableitung der Polynome $P_1$, $P_2$ - möglichst "sanft" verläuft und stetig ist.

Die vorstehend in Zusammenhang mit der Eingangsphase Z vorgetragenen Ausführungen treffen in analoger Weise für das Beschleunigungsprofil 10 während einer Ausgangsphase Z' zu, die einen Drehwinkelbereich von 240° bis 270° umfasst. Das Beschleunigungsprofil 10 der Ausgangsphase Z' folgt einem Polynom $P_3$ der allgemeinen Form $P_3(x) = \sum_{i=0}^{l} c_i x^i$ (Grad 1), wobei 1 = n. Außerdem sind die Polynome $P_1$, $P_3$ punktsymmetrisch zu dem Abszissenpunkt 180. Durch das Polynom $P_3$ wird ein vorteilhaftes "Auslaufen" des Beschleunigungsprofils 10 sichergestellt.

Wie bereits beschrieben, ist das Beschleunigungsprofil 10 während der Hauptphase H durch das Polynom $P_2$ definiert. Die Parameter $b_i$ sind die Koeffizienten des Polynoms $P_2$, das bei dem gezeigten Beispiel den Grad 5 hat und daher durch maximal sechs Koeffizienten eindeutig bestimmt ist. Die Koeffizienten $b_i$ hängen wiederum von einer Eigenschaft oder einem charakteristischen Parameter des Beschleunigungsprofils 10 der Eingangsphase Z ab. Im vorliegenden Fall ist dies die Dauer/ Länge der Eingangsphase Z. Sie beträgt 25 % der Dauer/Länge der Hauptphase H. Mit anderen Worten sind die Koeffizienten $b_i$ des Polynoms $P_2$ selbst eine Funktion des gewählten charakteristischen Parameters, hier der Länge der Eingangsphase Z, die der Länge der Ausgangsphase Z' entspricht, oder mathematisch ausgedrückt: $b_i(Z)$.

Wenn man nun die Länge der Eingangsphase Z, die nicht unbedingt bei jeder Ausführungsform des Verfahrens gleich lang sein muss wie die der Ausgangsphase Z', ändert, so hat dies automatisch eine Änderung des Polynoms $P_2$ zur Folge, wodurch zur Optimierung des Verfahrens zur Bewegung des Werkstücks - insbesondere zur Verbesserung der Energieeffizienz des Verfahrens - beigetragen wird. Jedem Koeffizienten $b_i$ ist ein eigener funktionaler Zusammenhang zwischen dem Koeffizientenwert und der Länge der Eingangsphase Z zugeordnet. Daher ist beispielsweise die Funktion $b_2(Z)$ nicht unbedingt gleich der Funktion $b_3(Z)$.

Die Koeffizientenfunktionen $b_i(Z)$ sind dabei so gewählt, dass sich automatisch ein insgesamt vorteilhaftes Beschleunigungsprofil 10 ergibt. Der Grundgedanke dieses Aspekts der Erfindung besteht somit darin, bei einer Änderung der Eigenschaften der Eingangsphase Z automatisch eine Anpassung des Polynoms $P_2$ zu bewirken (und umgekehrt), so dass nicht eine Vielzahl von Änderungen vorgenommen werden muss, um die Änderungen an dem Beschleunigungsprofil 10 der Eingangsphase Z zu berücksichtigen.

Es versteht sich, dass nicht nur die Länge der Eingangsphase Z zur automatischen Anpassung der Koeffizienten $b_i$ genutzt werden muss. Auch andere Eigenschaften des Beschleunigungsprofils 10 der Eingangsphase Z können alternativ oder zusätzlich berücksichtigt werden. Es wird darauf hingewiesen, dass die in Bezug auf die Eingangsphase Z beschriebenen Zusammenhänge in analoger Form auf das Beschleunigungsprofil 10 der Ausgangsphase Z' zu übertragen sind. Die Beschleunigungsprofile 10 der Phasen Z, Z' können grundsätzlich vollkommen unterschiedliche Eigenschaften aufweisen. Auch ist es möglich, dass die Koeffizienten $b_i$ des Polynoms $P_2$ von den Eigenschaften des Beschleunigungsprofils 10 der Ausgangsphase Z' abhängen, insbesondere um die Energieeffizienz des Verfahrens positiv zu beeinflussen.

Fig. 4 zeigt ein Profil 40 des zur Erzeugung des Beschleunigungsprofils 10 benötigten Antriebsmoments. Es ist zu erkennen, dass zur Erzeugung des Beschleunigungsprofils 10 in den Phasen Z, Z' nur äußerst geringe Antriebsmomente aufgebracht werden müssen. Bemerkenswert ist, dass die vorteilhafte Ausgestaltung des Beschleunigungsprofils 10 in den Phasen Z, Z' - die auf der Wahl eines verglichen mit dem Grad k des Polynoms $P_2$ höheren Grad n, 1 der Polynome $P_1$ bzw. $P_3$ basiert - die Wahl eines Beschleunigungspolynoms $P_2$ ermöglicht, das sich durch vergleichsweise geringe Antriebsmomente erzeugen lässt und trotzdem eine vergleichbare Dynamik wie herkömmliche Beschleunigungsprofile aufweist. Mit anderen Worten ergibt sich durch das Beschleunigungsprofil 10 ein geringeres kumulatives Produkt aus Beschleunigung und Geschwindigkeit des Drehtellers als bei herkömmlichen Systemen. Dieses Produkt ist gleichbedeutend mit der insgesamt aufzubringenden Energie für die Bewegung des Werkstücks von der ersten Ruheposition in die zweite Ruheposition. Auch das maximal aufzubringende Antriebsmoment ist geringer, wodurch in manchen Fällen auf kleiner dimensionierte Antriebsmotoren zurückgegriffen werden kann. Anders herum können unter Beibehaltung üblicher Antriebsmotoren mit Hilfe des Verfahrens größere und/oder schwerere Werkstücke bewegt werden als bisher.

Ein weiterer Vorteil des Verfahrens besteht darin, dass durch das Vorsehen einer Eingangsphase der beschriebene Art (und/oder einer Ausgangsphase) Schwingungen des Systems verringert oder sogar im Wesentlichen vollständig beseitigt werden können.

Fig. 5 zeigt ein Profil 50 der Ableitung des Beschleunigungsprofils 10 (Ruckkennwert). Die Ableitung des Polynoms $P_2$ weist einen parabelartigen Verlauf auf. Die Ableitungen der Polynome $P_1$, $P_3$ weisen jeweils in dem der Hauptphase H zugewandten Randbereich die größte Steigung auf. Dies zeigt an, dass hier die größten Beschleunigungsänderungen der jeweiligen Phase Z, Z' auftreten. Gleiches gilt für die Ableitung des Polynoms $P_2$ der Hauptphase H in den den Phasen Z, Z' jeweils zugewandten Randbereichen, wodurch charakteristische Spitzen des Ruckkennwertprofils 50 an den Abszissenwerten 120 und 240 entstehen. Zwischen den globalen Maxima der Polynome $P_1$, $P_3$ lassen sich im Wesentlichen beliebig gestaltete Polynome $P_2$ "einhängen".

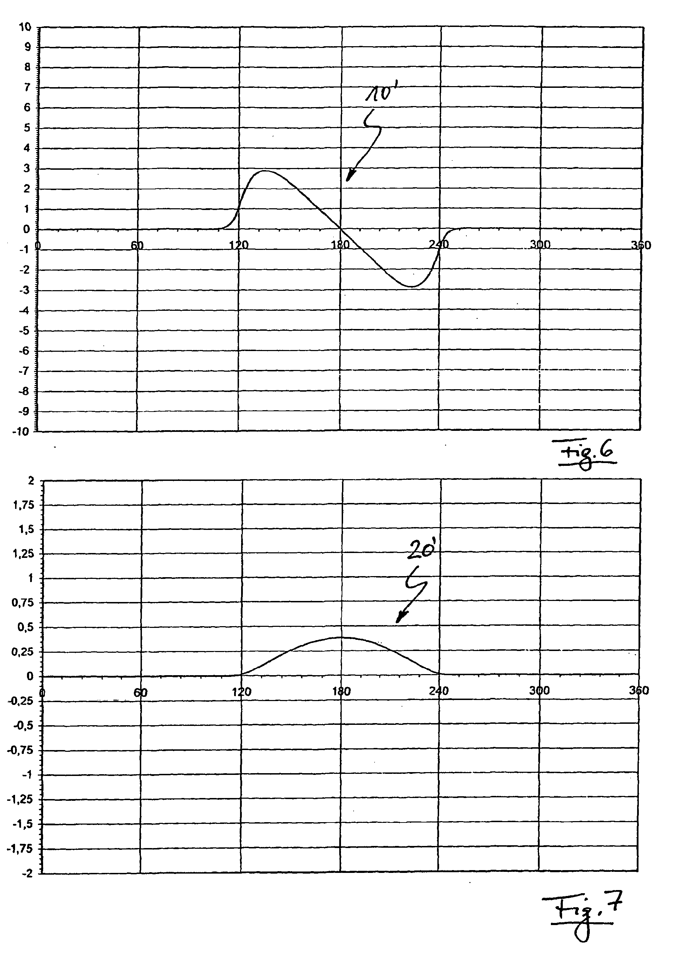

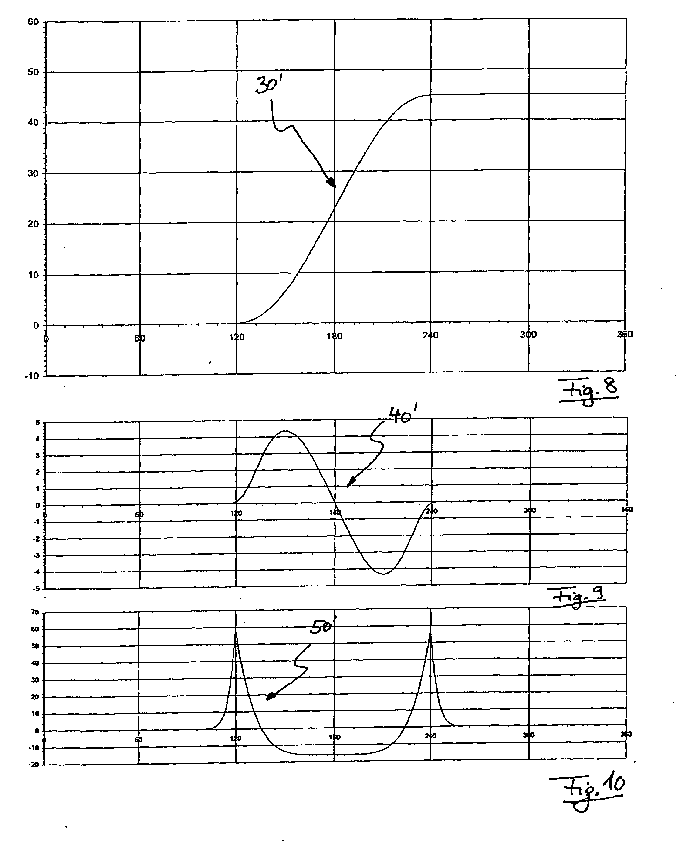

Fig. 6 zeigt ein weiteres Beschleunigungsprofil 10', das in dem mittleren Bereich der Hauptphase H einen linear anmutenden Abschnitt - zentriert um den Abszissenwert 180 - aufweist. Dadurch wird auch ein Geschwindigkeitsprofil 20' - gezeigt in Fig. 7 - in dem zentralen Bereich in Abszissenrichtung "gestreckt". Besonders deutlich sind die Auswirkungen dieser Eigenschaft einem auf dem Profil 10' basierenden Ruckkennwertprofil 50' zu entnehmen, das in Fig. 10 gezeigt ist. Das Profil 50' ist in einem Bereich um den Abszissenwert 180 waagrecht, d.h. es findet lediglich eine konstante Änderung der Beschleunigung statt. Mit anderen Worten wird der Übergang von positiver Beschleunigung zu negativer Beschleunigung (Abbremsen) der Bewegung "gestreckt".

Die Fig. 8 und 9 zeigen ein Bewegungsprofil 30' bzw. ein Antriebsmomentprofil 40', die in Zusammenhang mit dem Beschleunigungsprofil 10' stehen.

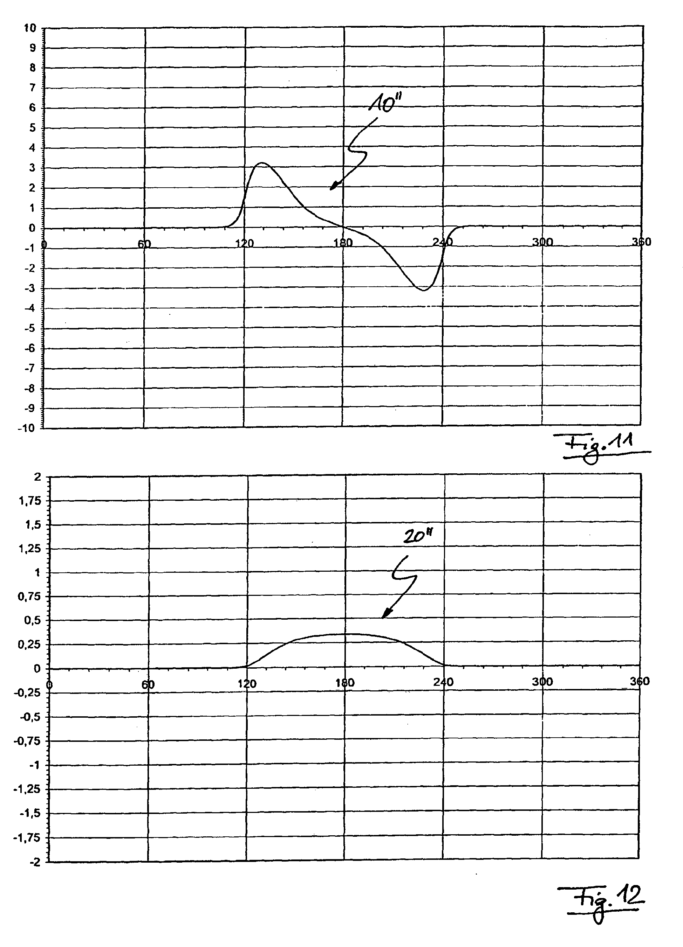

Fig. 11 zeigt ein weiteres Beschleunigungsprofil 10", das sich von dem Beschleunigungsprofil 10' beispielsweise dadurch unterscheidet, dass der Bereich um den Abszissenwert 180 nicht mehr linear ausgeführt ist, sondern einen Wendepunkt aufweist. Dadurch weist ein entsprechendes Geschwindigkeitsprofil 20" ein deutlich ausgeprägteres Plateau um den Abszissenwert 180 auf. Auch der Verlauf eines Antriebsmoments 40", das zur Erzeugung des Beschleunigungsprofils 10" erforderlich ist, spiegelt die Veränderung im Bereich um den Abszissenwert 180 wider. In einem entsprechenden Ruckkennwertprofil 50" drückt sich dies in einem lokalen, plateauförmig ausgebildeten Maximum aus, das den im Wesentlichen waagrecht verlaufenden zentralen Abschnitt des Ruckkennwertprofils 50' ersetzt.

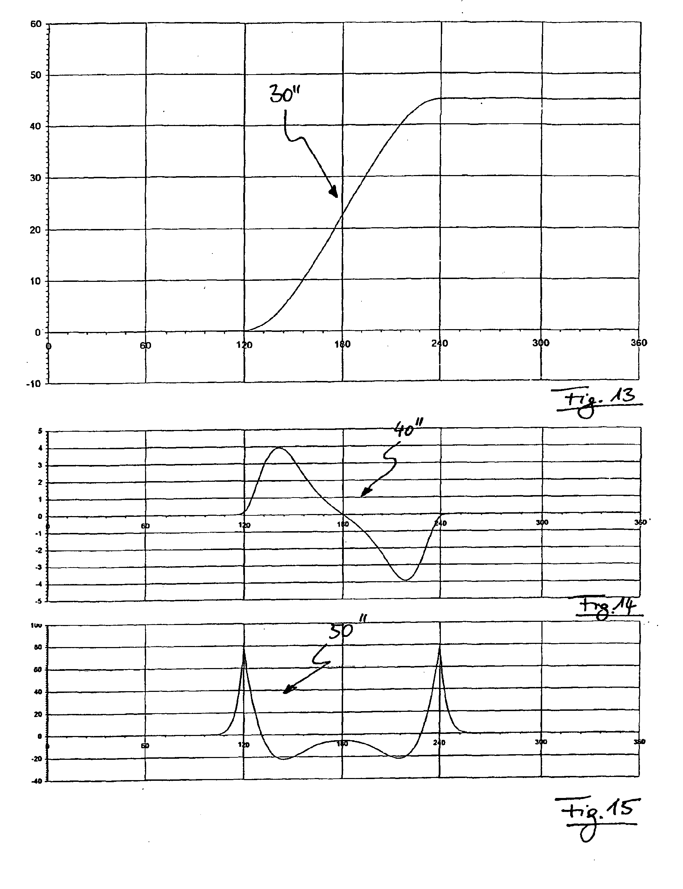

Trotz der deutlich hervortretenden Unterschiede der Beschleunigungsprofile 10, 10', 10" sind zwischen den entsprechenden Bewegungsprofilen 30, 30' bzw. 30", die in den Fig. 3, 8 bzw. 13 dargestellt sind, nicht ohne weiteres Unterschiede zu erkennen, was belegt, dass das bewegte Werkstück von den Unterschieden im Wesentlichen im Wegverlauf der Bewegung praktisch nichts "bemerkt". Die unterschiedlichen Beschleunigungsprofile 10, 10', 10" weisen allerdings einen unterschiedlichen zeitlichen Bedarf von zu erbringendem Antriebsmoment auf. D.h. das gewünschte Beschleunigungsprofil kann im Wesentlichen in Abhängigkeit von dem bereitstellbaren Antriebsmoment bzw. von der erreichbaren Antriebsmomentdynamik gewählt werden. Die unterschiedlichen Polynome $P_2$ in den jeweiligen Hauptphasen H lassen sich jedoch nicht ohne weiteres ohne eine einleitende Eingangsphase Z und/oder eine ausklingende Ausgangsphase Z' mit einem Beschleunigungswert von Null (d.h. Ruheposition) koppeln, da sonst massive Beschleunigungssprünge auftreten würden. Daher werden die Polynome $P_1$, $P_3$ dem Polynom $P_2$ vor- bzw. nachgeschaltet. Diese ermöglichen eine einleitende bzw. ausleitende Beschleunigung des Drehtellers, die durch den höheren Grad n, 1 der Polynome $P_1$ bzw. $P_3$ verglichen mit dem Grad k des Polynoms $P_2$ besonders effektiv sind. Die einleitende und die ausleitende Beschleunigung (Eingangs- bzw. Ausgangsphase) sorgen unter anderem dafür, dass der Beschleunigungsverlauf der eigentlichen Hauptbewegung (Bewegung in der Hauptphase) in den Randlagen geneigt sein kann, wodurch letztlich ein "flüssigeres" Beschleunigungsprofil für die Hauptbewegung gewählt werden kann. Dies trägt erheblich zur Verbesserung der Kinematik der Hauptbewegung und zur Steigerung der Energieeffizienz des Verfahrens bei. Es hat sich gezeigt, dass die Polynome $P_1$, $P_3$ der Phasen Z bzw. Z' vorteilhafterweise Polynome achten Grades sind.

Es versteht sich, dass das Verfahren bei im Wesentlichen allen Verfahren zur Bewegung eines Werkstücks zwischen zwei Ruhepositionen anwendbar ist. Vorstehend wurde das Verfahren beispielhaft anhand eines Rundschalttischs mit einem Drehteller erläutert. Es ist jedoch für den Grundgedanken der Erfindung unerheblich, ob die Bewegung eine Drehbewegung und/oder eine translatorische Bewegung ist. Außerdem ist die Ausgestaltung der Transportvorrichtung beliebig. Im Falle eines Rundschalttischs kann das erfindungsgemäße Verfahren beispielsweise gleichermaßen bei frei programmierbaren und bei zwangsgesteuerten Ausführungsformen zum Einsatz gelangen.

Ferner ist zu betonen, dass der Aspekt bezüglich einer Abhängigkeit der Koeffizienten des zweiten Polynoms von einem charakteristischen Parameter insbesondere des Beschleunigungsprofils der Eingangsphase grundsätzlich unabhängig davon ist, ob der Grad des ersten Polynoms größer ist als der Grad des zweiten Polynoms. Wesentlich ist bei diesem Aspekt, dass das zweite Polynom beispielsweise durch eine Änderung der Eigenschaften des ersten Polynoms beeinflusst werden kann, um die Hauptbewegung zum Beispiel energetisch zu optimieren und/oder unerwünschte Schwingungen zu beseitigen. Eine besonders gute Optimierung wird erreicht, wenn das erste Polynom und das dritte Polynom gespiegelt sind. Ein positive Folge davon ist zum Beispiel, dass die Nutzlasten am Abtriebselement erhöht werden können, ohne das System zu überlasten.

Bezugszeichenliste

| | |
|---|---|
| 10, 10', 10" | Beschleunigungsprofil |
| 20, 20', 20" | Geschwindigkeitsprofil |
| 30, 30', 30" | Bewegungsprofil |
| 40, 40', 40" | Antriebsmomentprofil |
| 50, 50', 50" | Ruckkennwertprofil |
| A | Abszisse |
| O | Ordinate |
| Z | Eingangsphase |
| Z' | Ausgangsphase |
| H | Hauptphase |
| $a_i$, $b_i$, $c_i$ | Koeffizient |
| $P_1$, $P_2$, $P_3$ | Polynom |
| n, k, l | Grad |
| x | Drehwinkel |

**Patentansprüche**

1. Verfahren zur rotatorischen und/oder linearen Bewegung eines Werkstücks von einer ersten Ruheposition in eine zweiten Ruheposition, das eine Eingangsphase (Z) und eine auf die Eingangsphase folgende Hauptphase (H) umfasst, wobei das Werkstück in den jeweiligen Phasen (Z, H) mit unterschiedlichen Beschleunigungsprofilen beschleunigt wird, wobei das Beschleunigungsprofil der Eingangsphase (Z) durch zumindest ein erstes Polynom ($P_1$) und das Beschleunigungsprofil der Hauptphase (H) durch zumindest ein zweites Polynom ($P_2$) definiert sind, wobei das erste Polynom ($P_1$) und das zweite Polynom ($P_2$) derart gewählt sind, dass ein Übergang von dem ersten Polynom ($P_1$) zu dem zweiten Polynom ($P_2$) stetig ist, und wobei der Grad des ersten Polynoms ($P_1$) größer ist als der Grad des zweiten Polynoms ($P_2$), **dadurch gekennzeichnet, dass** Randwerte einer Ableitung des zweiten Polynoms (P2) zusammen mit dem globalen Maximum der Ableitung des ersten Polynoms (P1) eine Spitze bilden.

2. Verfahren nach Anspruch 1, **dadurch gekennzeichnet, dass** zusätzlich eine auf die Hauptphase (H) folgende Ausgangsphase (Z') vorgesehen ist, während der das Werkstück gemäß einem Beschleunigungsprofil beschleunigt wird, das durch zumindest ein drittes Polynom ($P_3$) definiert ist, das insbesondere ebenfalls höheren Grades ist als das zweite Polynom ($P_2$).

3. Verfahren nach Anspruch 2, **dadurch gekennzeichnet, dass** das dritte Polynom ($P_3$) einen inversen oder gespiegelten Verlauf bezüglich des ersten Polynoms ($P_1$) aufweist.

4. Verfahren nach zumindest einem der vorstehenden Ansprüche, **dadurch gekennzeichnet, dass** das erste Polynom ($P_1$) 8. Grades ist und dass insbesondere das zweite Polynom ($P_2$) 5. Grades ist.

5. Verfahren nach Anspruch 2, **dadurch gekennzeichnet, dass** Randwerte einer Ableitung des zweiten Polynoms ($P_2$) zusammen mit dem globalen Maximum der Ableitung des dritten Polynoms ($P_3$) eine Spitze bilden, wobei die Ableitung des zweiten Polynoms ($P_2$) insbesondere einen parabelartigen Verlauf aufweist.

6. Verfahren nach zumindest einem der vorstehenden Ansprüche, **dadurch gekennzeichnet, dass** die Koeffizienten (bi) des zweiten Polynoms ($P_2$) jeweils durch eine Funktion zumindest eines charakteristischen Parameters definiert sind.

7. Verfahren nach Anspruch 6, **dadurch gekennzeichnet, dass** der charakteristische Parameter ein Parameter des Beschleunigungsprofils der Eingangsphase (Z) und insbesondere eine Dauer des Beschleunigungsprofils der Eingangsphase (Z) ist.

8. Verfahren nach zumindest einem der vorstehenden Ansprüche, **dadurch gekennzeichnet, dass** die Dauer der Eingangsphase (Z) etwa 10 % bis 40 %, bevorzugt 20 % bis 30 % der Dauer der Hauptphase (H) beträgt.

9. Transportvorrichtung mit einem für eine Aufnahme eines Werkstücks geeigneten Transportelement, das rotatorisch und/oder linear von einer ersten Ruheposition in eine zweite Ruheposition bewegbar ist, wobei die Transportvorrichtung eine programmierbare Steuervorrichtung umfasst, die dazu ausgebildet ist, die Bewegung des Transportelements gemäß einem Verfahren nach zumindest einem der vorstehenden Ansprüche zu steuern.

10. Transportvorrichtung mit einem für eine Aufnahme eines Werkstücks geeigneten Transportelement, das rotatorisch und/oder linear von einer ersten Ruheposition in eine zweite Ruheposition bewegbar ist, wobei die Transportvorrichtung eine mechanische Zwangssteuerung umfasst, die derart ausgebildet ist, dass das Transportelement gemäß einem Verfahren nach zumindest einem der Ansprüche 1 bis 8 bewegt ist.

11. Transportvorrichtung nach Anspruch 10, **dadurch gekennzeichnet, dass** das Transportelement ein Abtriebsglied ist, das in einen Wulst einer Kurve eingreifende Mitnehmer aufweist, um durch eine Drehbewegung der Kurve eine zwangsgesteuerte Drehbewegung des Abtriebsglieds zu erzeugen.

**Claims**

1. A method for the rotary and/or linear movement of a workpiece from a first position of rest into a second position of rest,
which comprises an entry phase (Z) and a main phase (H) following on from the entry phase,
wherein the workpiece is accelerated using different acceleration profiles in the respective phases (Z, H), with the acceleration profile of the entry phase (Z) being defined by at least a first polynomial ($P_1$) and the acceleration profile of the main phase (H) being defined by at least a second polynomial ($P_2$);
wherein the first polynomial ($P_1$) and the second polynomial ($P_2$) are selected such that a transition from the first polynomial ($P_1$) to the second polynomial ($P_2$) is constant; and
wherein the degree of the first polynomial ($P_1$) is larger than the degree of the second polynomial ($P_2$),
**characterised in that**
marginal values of a derivative of the second polynomial ($P_2$) form a peak together with the global maximum of the derivative of the first polynomial ($P_1$).

2. A method in accordance with claim 1,
**characterised in that**
an exit phase (Z') is additionally provided which follows on from the main phase (H) and during which the workpiece is accelerated in accordance with an acceleration profile which is defined by at least a third polynomial ($P_3$) which is in particular likewise of a higher degree than the second polynomial ($P_2$).

3. A method in accordance with claim 2,
**characterised in that**
the third polynomial ($P_3$) has an inverse or mirrored course with respect to the first polynomial ($P_1$).

4. A method in accordance with at least one of the preceding claims,
**characterised in that**
the first polynomial ($P_1$) has a degree of 8; and **in that** in particular the second polynomial ($P_2$) has a degree of 5.

5. A method in accordance with claim 2,
**characterised in that**
marginal values of a derivative of the second polynomial ($P_2$) form a peak together with the global maximum of the derivative of the third polynomial ($P_3$), with the derivative of the second polynomial ($P_2$) in particular having a parabola-like course.

6. A method in accordance with at least one of the preceding claims,
**characterised in that**
the coefficients ($b_l$) of the second polynomial ($P_2$) are each defined by a function of at least one characteristic parameter.

7. A method in accordance with claim 6,
**characterised in that**
the characteristic parameter is a parameter of the acceleration profile of the entry phase (Z) and is in particular a duration of the acceleration profile of the entry phase (Z).

8. A method in accordance with at least one of the preceding claims,
**characterised in that**
the duration of the entry phase (Z) amounts to approximately 10% to 40%, preferably 20% to 30%, of the duration of the main phase (H).

9. A transport apparatus having a transport element which is suitable for a reception of a workpiece and which is movable in a rotary and/or linear manner from a first position of rest into a second position of rest, wherein the transport apparatus comprises a programmable control apparatus which is configured to control the movement of the transport element in accordance with a method in accordance with at least one of the preceding claims.

10. A transport apparatus having a transport element which is suitable for a reception of a workpiece and which is movable in a rotary and/or linear manner from a first position of rest into a second position of rest, wherein the transport apparatus comprises a mechanical positive control which is configured such that the transport element is moved in accordance with a method in accordance with at least one of the claims 1 to 8.

11. A transport apparatus in accordance with claim 10,
**characterised in that**
the transport element is an output member which has entrainers which engage into a bead of a cam to generate a positively controlled rotary movement of the output member by a rotary movement of the cam.

## Revendications

**1.** Procédé pour imprimer un mouvement rotatif et/ou linéaire à une pièce à oeuvrer depuis une première position de repos jusque dans une seconde position de repos, qui inclut une phase de démarrage (Z) et une phase principale (H) qui fait suite à la phase de démarrage,

dans lequel la pièce à oeuvrer est accélérée dans les phases respectives (Z, H) avec des profils d'accélération différents, tels que le profil d'accélération de la phase de démarrage (Z) est défini par au moins un premier polynôme ($P_1$) et le profil d'accélération de la face principale (H) est défini par au moins un second polynôme ($P_2$),

dans lequel le premier polynôme ($P_1$) et le second polynôme ($P_2$) sont choisis de telle façon qu'une transition du premier polynôme ($P_1$) au second polynôme ($P_2$) est continue, et

dans lequel le degré du premier polynôme ($P_1$) est plus élevé que le degré du second polynôme ($P_2$), **caractérisé en ce que**

les valeurs limite d'une dérivée de second polynôme ($P_2$) forment une pointe conjointement avec le maximum global de la dérivée du premier polynôme ($P_1$).

**2.** Procédé selon la revendication 1, **caractérisé en ce qu'**il est prévu en supplément une phase de sortie (Z') qui fait suite à la phase principale (H), pendant laquelle la pièce à oeuvrer est accélérée selon un profil d'accélération qui est défini par au moins un troisième polynôme ($P_3$), lequel a en particulier également un degré plus élevé que le second polynôme ($P_2$).

**3.** Procédé selon la revendication 2, **caractérisé en ce que** le troisième polynôme ($P_3$) présente une évolution inverse ou symétrique par rapport au premier polynôme ($P_1$).

**4.** Procédé selon l'une au moins des revendications précédentes, **caractérisé en ce que** le premier polynôme ($P_1$) est du huitième degré, et **en ce que** le second polynôme ($P_2$) est en particulier du cinquième degré.

**5.** Procédé selon la revendication 2, **caractérisé en ce que**

des valeurs limite d'une dérivée du second polynôme ($P_2$) forment une pointe conjointement avec le maximum global de la dérivée du troisième polynôme ($P_3$), et la dérivée du second polynôme ($P_2$) présente en particulier une évolution de type parabolique.

**6.** Procédé selon l'une au moins des revendications précédentes, **caractérisé en ce que** les coefficients ($b_i$) du second polynôme ($P_2$) sont définis respectivement par une fonction d'au moins un paramètre caractéristique.

**7.** Procédé selon la revendication 6, **caractérisé en ce que** le paramètre caractéristique est un paramètre du profil d'accélération de la phase de démarrage (Z) et en particulier une durée du profil d'accélération de la phase de démarrage (Z).

**8.** Procédé selon l'une au moins des revendications précédentes, **caractérisé en ce que** la durée de la phase de démarrage (Z) s'élève à environ 10 % à 40 %, de préférence 20 % à 30 %, de la durée de la phase principale (H).

**9.** Dispositif de transport comprenant un élément de transport approprié pour la réception d'une pièce à oeuvrer, qui est déplaçable en mouvement rotatif et/ou linéaire depuis une première position de repos jusque dans une seconde position de repos, le dispositif de transport incluant un dispositif de commande programmable qui est réalisé pour commander le mouvement de l'élément de transport selon un procédé de l'une au moins des revendications précédentes.

**10.** Dispositif de transport comprenant un élément de transport approprié pour la réception d'une pièce à oeuvrer, qui est déplaçable en mouvement rotatif et/ou linéaire depuis une première position de repos jusque dans une seconde position de repos, le dispositif de transport incluant une commande positive mécanique, qui est réalisée de telle manière que l'élément de transport est déplacé selon un procédé de l'une au moins des revendications 1 à 8.

**11.** Dispositif de transport selon la revendication 10, **caractérisé en ce que** l'élément de transport est un organe mené, qui comporte un élément d'entraînement s'engageant dans un bourrelet d'une came, afin d'engendrer un mouvement rotatif à commande positive de l'organe mené par un mouvement de rotation de la came.

Fig.1

Fig.2

Fig. 3

Fig. 4

Fig. 5

Fig.6

Fig.7

30'

Fig. 8

40'

Fig. 9

50'

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090102411 A1